# EUROPÄISCHE PATENTANMELDUNG

(11) **EP 1 088 693 A2**
(43) Veröffentlichungstag der Anmeldung: **04.04.2001**
(21) Anmeldenummer: 00113870.0
(22) Anmeldetag: 30.06.2000
(51) Int. Cl.: B60J 10/12

(54) **Dichtelement für ein Fahrzeugdach mit einer Dachöffnung**

(30) Priorität: 30.09.1999 DE 19946925
(71) Anmelder: CTS Fahrzeug-Dachsysteme GmbH, 21079 Hamburg (DE)
(72) Erfinder: Raisch, Dieter, 71277 Rutesheim (DE); Arnold, Dirk, 72250 Freudenstadt (DE); Salz, Wolfram, 71665 Vaihingen/Enz (DE)
(74) Vertreter: Müller, Gottfried

(57) **Zusammenfassung**

Ein Dichtelement (5) für ein Fahrzeugdach (2)mit einer Dachöffnung, in der ein bewegliches Dachelement (3) zwischen Öfnungs- und Schließstellung verstellbar angeordnet ist, weist eine Dichtfläche (17) auf, die in Schließstellung des Dachelements (3) im Dichteingriff mit einer Kante (18) des Dachelements (3) steht.

Um in einfacher Weise die Dichtigkeit zu verbessern ist vorgesehen, dass das Dichtelement (3) einen quer ausragenden Dichtarm (10) aufweist, dessen Oberseite die Dichtfläche (17) bildet und dass der Dichtarm (10) auf einer Stütze aufliegt.

## Beschreibung

Die Erfindung betrifft ein Dichtelement für ein Fahrzeugdach mit einer Dachöffnung nach dem Oberbegriff des Anspruches 1.

Aus der Druckschrift DE 196 34 325 A1 ist ein Fahrzeugdach mit einer Folge von Schiebelamellen zum wahlweisen Verschließen und Freigeben einer Dachöffnung bekannt. Die Lamellen sind entlang von Führungen in der Weise geführt, dass beim Verstellen der Lamellen in Fahrzeuglängsrichtung der flächige Lamellenverbund eine Translationsbewegung ausführt. In Schließstellung beaufschlagt jede Lamelle Dichtelemente, welche zu beiden Seiten der Dachöffnung an einem Dachrahmen gehalten sind. Die Dichtelemente sollen in Schließstellung der Lamellen einen wasser- und winddichten Abschluß zum Dachrahmen gewährleisten, indem eine Lamellenseitenkante gegen eine zur Dachoberseite weisende, obere Dichtfläche drückt. Die Dichtfläche des als Hohlkammerprofil ausgebildeten Dichtelements ist schräg in Richtung des Fahrzeuginnenraums geneigt, so dass die Lamellenseitenkante mit hoher Dichtkraft gegen die Dichtfläche gepresst werden muss um einen dichten Abschluss zwischen Lamellen und Dachfläche zu sicher zu stellen.

Durch die Dichtkraft wird die Dichtfläche konkav verformt, wodurch sich eine der Hohlkammer des Profils zugewandte Ausbuchtung ausbildet, in der sich Wasser ansammeln kann, welches durch Diffusionskräfte in den Fahrzeuginnenraum geleitet werden kann. Zudem kann bei einer Bewegung der Lamellen in Schließ- oder Öffnungsrichtung das Wasser in Richtung des Innenraums ablaufen.

Außerdem besteht die Gefahr, dass als Folge der hohen Dichtkraft und der damit einher gehenden Verformung des Hohlkammerprofils Materialermüdung und erhöhter Verschleiß am Dichtelement auftreten, wodurch die Dichtfunktion beeintrachtigt werden kann. Risse in der Hohlkammerwandung können aufgrund der entstehenden Verbindung des Hohlkammerinnenraums mit der Atmosphäre das elastische Verhalten des Dichtelements in unerwünschter Weise ändern.

Der Erfindung liegt das Problem zugrunde ein gattungsgemäßes Dichtelement in einfacher Weise mit hoher Dichtigkeit auszubilden.

Dieses Problem wird erfindungsgemäß mit den Merkmalen des Anspruches 1 gelöst.

Gemäß der Neuerung weist das Dichtelement einen quer ausragenden Dichtarm auf, der auf einer fahrzeugseitigen Stütze im Fahrzeugdach aufliegt. Das Dichtelement ist nicht als Hohlkammerprofil ausgebildet, vielmehr wird die Dichtfunktion gegenüber dem verschieblichen Dachelement mittels des seitlichen Dichtarms erreicht, der einerseits durch seine Elastizität eine flexible Anpassung an die angrenzende Seitenkante des verschieblichen Dachelements gewährleistet und auch größere Toleranzen des Dachelements ausgleichen kann und andererseits durch die Abstützung einen ausreichenden Widerhalt zum Aufbau einer hinreichend große Dichtkraft findet. Wegen des Verzichts auf das Hohlkammerprofil haben zumindest kleinere Schädigungen des Dichtelements keinen signifikanten Einfluss auf das Dichtverhalten, weil das elastische Verhalten des Dichtelements erhalten bleibt; die Verschleißresistenz des Dichtelements ist erhöht.

Das elastische Verhalten und das Dichtverhalten können über die Geometrie des Dichtarms des Dichtelements beeinflusst werden. In Abhängigkeit von Länge, Verlauf der Querschnittsgeometrie und Winkellage zum Rumpf des Dichtelements kann die Dichtfunktion eingestellt werden. In einer vorteilhaften Ausführung sind Dichtrumpf und Dichtarm etwa gleich lang ausgebildet und stehen im unbelasteten Zustand näherungsweise in einem 90°-Winkel zueinander. Der verhältnismäßig lang ausgeführte Dichtarm gewährleistet ein weiches elastisches Verhalten beim Schließen des Fahrzeugdaches.

Die Stütze im Fahrzeugdach, die das freie Ende des Dichtarms abstützt, ist bevorzugt höhenverstellbar ausgebildet, wodurch nach dem Einbau des Dichtelements in das Fahrzeugdach eine Feineinstellung zur Beeinflussung des Dichtverhaltens durchgeführt werden kann. Diese Feinabstimmung hilft Toleranzen im Fahrzeugdach und im Dichtelement sowie Ungenauigkeiten beim Zusammenbau des Daches bzw. Einstecken des Dichtelements auszugleichen und einen einheitlichen Dichtungsdruck einzustellen. Die Fixierung der Stütze in der gewünschten, eingestellten Höhe kann form-, reib- oder stoffschlüssig oder mittels eines Befestigungselements erfolgen.

Das aus Dichtelement, Dachrahmen und beweglichem Dachelement bestehende Dachmodul kann vor dem Einbau in das Fahrzeug auf Dichtigkeit überprüft werden.

Zweckmäßig weist die Stütze eine Auflageschulter auf, auf die das freie Ende des Dichtarms mit verbessertem Halt aufgelegt werden kann. Das freie Ende des Dichtarms ist vorteilhaft mit einem Dichtbund versehen, der in die Auflageschulter der Stütze eingreift, wobei der Dichtbund insbesondere einteilig mit dem Dichtelement ausgeführt ist.

Weitere Vorteile und zweckmäßige Ausführungsformen sind den weiteren Ansprüchen, der Figurenbeschreibung und der Zeichnung zu entnehmen. Es zeigen:
- Fig. 1: eine perspektivische Ansicht eines Fahrzeugdaches mit mehreren zwischen Schließ- und Öffnungsstellung überführbaren Dachelementen in einer Dachöffnung,
- Fig. 2: ein Dichtelement in dem Fahrzeugdach zwischen karosseriefestem Dachrahmen und verstellbarem Dachelement im Schnitt gemäß Schnittlinie II-II aus Fig. 1.

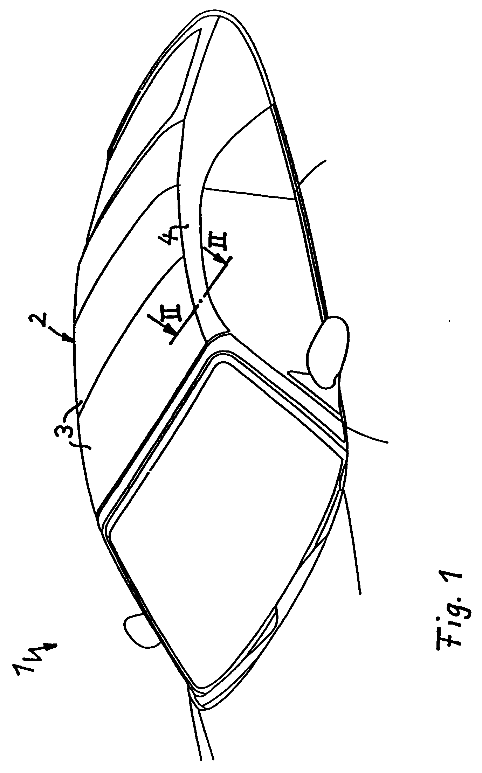

Das in Fig. 1 dargestellte Fahrzeugdach 2 eines Kraftfahrzeugs 1 weist eine Mehrzahl zwischen Schließposition und Öffnungsposition verstellbarer Dachelemente 3 in einer Dachöffnung des Fahrzeugdaches auf. Die Dachelemente können Teil eines Hardtop-Fahrzeugdaches, eines Lamellen-Schiebedaches oder aber eines Faltverdecks sein. Es kann sich gegebenenfalls aber auch um ein Schiebedach mit nur einem Dachelement handeln.

Die Dachöffnung des Fahrzeugdaches wird von einem Dachrahmen 4 begrenzt, in welchem ein bzw. mehrere Dichtelemente für einen wasser- und winddichten Abschluss zwischen dem Dachrahmen und den Dichtelementen in Schließstellung aufgenommen sind. Auch in dem Rahmen der Windschutzscheibe bzw. einem heckseitigen Rahmen sind Dichtelemente angeordnet.

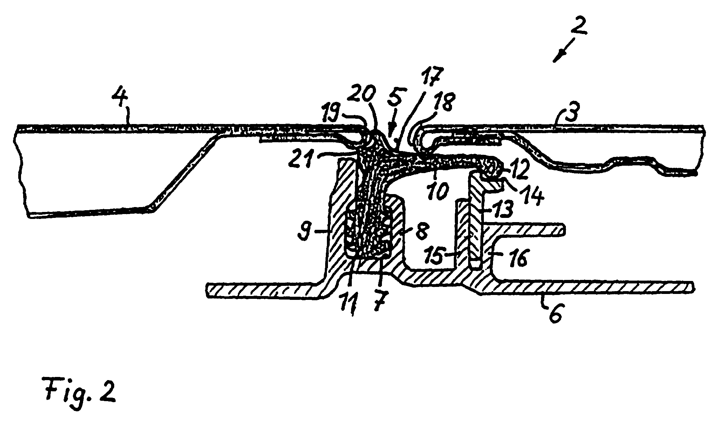

Der Schnittdarstellung gemäß Fig. 2 ist ein zwischen Dachrahmen 4 und beweglichem Dachelement 3 des Fahrzeugdaches 2 angeordnetes Dichtelement 5 zu entnehmen, das in einer Aufnahmekammer 7 einer fahrzeugfesten Führungsschiene 6 gehalten ist, wobei die Führungsschiene 6 in Fig. 2 nicht dargestellte Führungen für die Bewegung des Dachelements 3 aufweist. Die Aufnahmekammer 7 weist zwei Seitenwände 8, 9 auf, die eine obere Einstecköffnung der Aufnahmekammer 7 begrenzen. Eine Seitenwand 8 weist eine geringere Höhe auf als die gegenüberliegende Seitenwand 9, um Raum zu schaffen für einen seitlich ausragenden Dichtarm 10 des Dichtelements 5. Die höhere aufragende Seitenwand 9 gewährleistet eine Abstützung des Dichtelements in Schließstellung des Dachelements 3.

Der Dichtarm 10 erstreckt sich quer zur Öffnungs- und Schließrichtung des Dachelements 3. Der Dichtarm 10 zweigt von einem oberen Abschnitt eines Dichtrumpfs 11 ab, dessen unterer Abschnitt in die Aufnahmekammer 7 eingesteckt ist und Rippen aufweist, um den Widerhalt in der Aufnahmekammer 7 zu verbessern. Die Ebenen des Dichtrumpfs 11 und des Dichtarms 10 liegen etwa rechtwinklig zueinander, Dichtrumpf und Dichtarm sind näherungsweise gleich lang. Die Oberseite des Dichtarms 10 bildet eine Dichtfläche 17, auf der eine Kante 18 des Dachelements 3 dichtend aufliegt.

Der Dichtarm 10 weist eine sich in Richtung seiner freien Stirnseite verjüngende Querschnittsgeometrie auf. Im Bereich der Stirnseite 10 ist ein verbreiterter Dichtbund 12 ausgebildet, der auf einer Auflageschulter 14 einer Stütze 13 aufliegt, welche an der Führungsschiene 6 gehalten ist. Die Auflageschulter 14 ist einteilig mit der Stütze 13 ausgebildet.

Die Stütze 13 ist im Zwischenraum zwischen zwei Stützwänden 15, 16 gehalten, die an der Führungsschiene 6 ausgebildet sind. Die Stütze 13 ist im Zwischenraum höhenbeweglich, jedoch fixierbar angeordnet, wobei über die Einstellung der Höhe der Stütze 13 der Dichtdruck der Kante 18 auf die Dichtfläche 17 des Dichtelements 3 beeinflusst werden kann. Die Dichtfläche 17 verläuft etwa horizontal; es können jedoch auch von der Horizontalen abweichende Winkellagen durch eine entsprechende Höheneinstellung der Stütze 13 realisiert werden. Die Kante 18 des Dachelements 3 liegt vorteilhaft im frei hängenden Bereich des Dichtarms 10 auf der Dichtfläche 17 auf, um ein optimales elastisches Verhalten des Dichtarms 10 zu ermöglichen. Die Ebene der Stütze 13 verläuft in Bewegungsrichtung des Dachelements 3.

Die Fixierung der Höhe der Stütze 13 erfolgt zweckmäßig durch geeignete Befestigungselemente.

Im Bereich der Rahmenkante 19 des Dachrahmens 4 sind im äußeren Übergangsbereich zwischen Dichtrumpf 11 und Dichtarm 10 eine Dichtlippe 20 und eine Dichtkante 21 mit zwischenliegender Dichtnut ausgebildet, in die die Rahmenkante 19 eingreift. Die Dichtlippe 20 begrenzt die Rahmenkante 19 oberhalb, die Dichtkante 21 unterhalb der Dichtnut. Dichtlippe 20, Dichtkante 21 und die zwischenliegende Dichtnut garantieren eine wind- und wasserdichte Verbindung zwischen Dichtelement 3 und Dachrahmen 4.

## Patentansprüche

1. Dichtelement für ein Fahrzeugdach mit einer Dachöffnung, in der ein bewegliches Dachelement (3) zwischen Öffnungs- und Schließstellung verstellbar angeordnet ist, wobei das Dichtelement (5) in Schließstellung des Dachelements (3) mit einer der Dachoberseite zugewandten Dichtfläche (17) im Dichteingriff mit einer Kante (18) des Dachelements (3) liegt,
**dadurch gekennzeichnet,**
dass das Dichtelement (5) einen quer ausragenden Dichtarm (10) aufweist, dessen Oberseite die Dichtfläche (17) bildet und dass der Dichtarm (10) auf einer Stütze (13) aufliegt.

2. Dichtelement nach Anspruch 1,
**dadurch gekennzeichnet,**
dass die Stütze (13) höhenverstellbar ausgebildet ist.

3. Dichtelement nach Anspruch 1 oder 2,
**dadurch gekennzeichnet,**
dass die Stütze (13) auf einer karosseriefesten Führungsschiene (6) des Dachelements (3) gehalten ist.

4. Dichtelement nach Anspruch 3,
**dadurch gekennzeichnet,**
dass die Stütze (13) zwischen zwei Stützwänden (15, 16) der Führungsschiene (6) höhenverstellbar gehalten ist.

5. Dichtelement nach einem der Ansprüche 1 bis 4,
**dadurch gekennzeichnet,**
dass an der freien Stirnseite des Dichtarms (10) ein Dichtbund (12) gebildet ist, der auf der Stütze (13) aufliegt.

6. Dichtelement nach einem der Ansprüche 1 bis 5,
**dadurch gekennzeichnet,**
dass die Stütze (13) eine Auflageschulter (14) für den Dichtarm (10) aufweist.

7. Dichtelement nach einem der Ansprüche 1 bis 6,
**dadurch gekennzeichnet,**
dass das Dichtelement (5) einen Dichtrumpf (11) aufweist, von dem der Dichtarm (10) seitlich abzweigt.

8. Dichtelement nach Anspruch 7,
**dadurch gekennzeichnet,**
dass die Mittelebenen des Dichtrumpfs (11) und des Dichtarms (10) im unbelasteten Zustand des Dichtelements (5) einen Winkel von näherungsweise 90° einschließen.

9. Dichtelement nach Anspruch 7 oder 8,
**dadurch gekennzeichnet,**
dass der Dichtrumpf (11) und der Dichtarm (10) näherungsweise die gleiche Länge aufweisen.

10. Dichtelement nach einem der Ansprüche 1 bis 9,
**dadurch gekennzeichnet,**
dass benachbart zur Dichtfläche (17) des Dichtarms (10) eine Dichtlippe (20) am Dichtelement (5) vorgesehen ist, welche die Rahmenkante (19) eines die Dachöffnung begrenzenden Dachrahmens (4) beaufschlagt.

11. Dichtelement nach Anspruch 10,
**dadurch gekennzeichnet,**
dass eine der Rahmenkante (19) des Dachrahmens (4) zugewandte, der Dichtlippe (20) benachbarte Dichtkante (21) am Dichtelement (5) vorgesehen ist, wobei zwischen Dichtkante (21) und Dichtlippe (20) eine die Rahmenkante (19) aufnehmende Dichtnut am Dichtelement (5) vorgesehen ist.
